# FASCICULE DE BREVET EUROPEEN

(11) **EP 0 796 049 B1**
(45) Date de publication et mention de la délivrance du brevet: **13.06.2001**
(21) Numéro de dépôt: 96933495.2
(22) Date de dépôt: 07.10.1996
(51) Int. Cl.: A44C 21/00, G07F 1/06, B29C 45/14, G06K 19/077

(54) **JETON DE JEU**
SPIELMARKE
GAMBLING CHIP

(30) Priorité: 09.10.1995 FR 9511877
(43) Date de publication de la demande: 24.09.1997
(73) Titulaire: ETABLISSEMENTS BOURGOGNE ET GRASSET, 21420 Savigny-les-Beaune (FR)
(72) Inventeur: GASSIES, Christophe, F-21420 Echevronne (FR); BOIRON, Dominique, F-21200 Beaune (FR)
(74) Mandataire: Poidatz, Emmanuel
(86) Numéro de dépôt international: FR9601558
(87) Numéro de publication internationale: WO9713424

(56) Documents cités:
- EP-A- 0 436 497
- EP-A- 0 646 893
- EP-A- 0 694 872
- US-A- 3 968 582
- US-A- 4 261 947

## Description

La présente invention concerne des jetons de jeu également appelés jetons de casino. Par jeton de jeu on entend tout élément en forme de disque utilisable en salle de jeux et représentant une valeur nominale prédéterminée ou non. Ces jetons sont classés en deux familles selon le type de jeux pour lesquels ils sont utilisés, jetons "français ou européens" avec valeur prédéterminée et jetons "américains" avec ou sans valeur prédéterminée.

D'une façon générale, les jetons sont fabriqués en matière plastique rigide et résistante aux rayures. Les jetons présentent des motifs variés en dessin et en couleurs pour réduire les risques de falsification et/ou de reproduction frauduleuse. De plus ces motifs incorporent de l'information telle que l'identification du casino et/ou la valeur du jeton. Les jetons sont ainsi marqués sur leurs faces mais également sur la tranche pour faciliter le repérage des jetons lorsqu'ils sont manipulés empilés sur les tables de jeu.

Dans la pratique, l'opération de marquage sur la tranche, réalisée par exemple par sublimation, s'avère délicate et onéreuse.

De plus le brevet US-A-3.968.582 décrit un jeton de jeu en forme générale de disque selon le préambule de la revendication 1 et dans lequel le jeton, à corps annulaire et trou central traversant, est marqué sur la tranche par injection de matière. Plus précisément le jeton décrit dans le brevet précité comporte deux demi-disques en forme d'anneau en matière plastique rigide solidarisés l'un à l'autre et dont les faces externes présentent chacune trois créneaux radiaux en vis-à-vis destinés à recevoir trois boucles radiales de solidarisation en matière plastique injectée. Les deux demi-disques en forme d'anneau sont en contact par l'intermédiaire d'au moins une projection axiale d'écartement prévue sur au moins une des faces internes des demi-disques de façon à définir entre ces derniers et les trois boucles de solidarisation plusieurs portions de zone périphérique annulaire débouchant sur la tranche du jeton et remplies de matière injectée, les trois boucles de solidarisation étant solidarisées entre elles par un anneau interne venu de matière avec les boucles et bordant le trou central traversant du jeton sur toute l'épaisseur de celui-ci.

Par ailleurs la demande de brevet EP-A1-0646893 décrit un jeton de paiement anti-fraude, utilisable dans les machines à sous, principalement constitué d'un corps annulaire formé d'un anneau de métal et présentant un trou central traversant recevant un circuit électronique d'identification à lecture sans contact et fermé à chaque extrémité par une flasque en matière plastique soudée, clipsée ou collée.

L'invention a pour but de proposer un jeton, notamment un jeton de jeu, à faces pleines et de structure relativement simple et robuste permettant notamment un marquage de tranche facilité.

A cette fin, l'invention propose un jeton de jeu en forme générale de disque, ou un dispositif analogue représentatif d'une valeur nominale prédéterminée ou non, comportant deux demi-disques en matière plastique rigide solidarisés l'un à l'autre, les deux demi-disques étant en contact par l'intermédiaire d'au moins une projection axiale d'écartement prévue sur au moins une des faces internes des demi-disques de façon à définir entre ces derniers une zone annulaire périphérique débouchant sur la tranche du jeton, caractérisé en ce que :
- les deux demi-disques sont à faces pleines ou à faces sensiblement pleines, les faces internes des demi-disques définissant entre elles une zone centrale interne dans le jeton destinée à accueillir un insert et/ou une matière de remplissage, et en ce que
- les deux demi-disques sont solidarisés par un joint de solidarisation en matière plastique (14, 83, 83', 110) déposé par injection dans ladite zone annulaire périphérique (16, 131).

La structure du jeton selon l'invention comporte plusieurs avantages par rapport aux jetons à faces pleines connus, notamment aux jetons pleins classiques. Par le choix du dessin des bords de la gorge formant la zone annulaire périphérique, de la position angulaire des deux demi-disques et d'une couleur de la matière du joint différente de la couleur des demi-disques, il est possible d'obtenir sans opération supplémentaire un marquage de tranche net, indélébile (par marquage dans la masse) et infalsifiable. Ce dernier point est très intéressant lorsque le marquage de tranche est utilisé pour représenter la valeur du jeton. De plus, la solidarisation entre les deux demi-disques est robuste et totalement étanche sans pour autant déformer les faces externes planes des demi-disques. Enfin, la structure obtenue autorise la mise en place d'inserts centraux entre les deux demi-disques, par exemple des lests en métal mais également des inserts relativement fragiles tels que des dispositifs à circuit électronique.

En particulier, selon un mode de réalisation de l'invention, le jeton comporte un insert se présentant sous la forme d'un dispositif électronique, par exemple un dispositif électronique incorporant une mémoire porteuse de l'identification du jeton et un émetteur-récepteur à antenne périphérique, et disposé dans ladite zone centrale interne entre les deux demi-disques soit directement, soit encapsulé dans un boîtier ou enrobé dans une pastille de résine synthétique protectrice.

Avantageusement au moins un demi-disque du jeton présente un évidement central sur sa face interne pour former tout ou partie de la zone centrale interne dans le jeton.

De façon optionnelle l'espace libre dans la zone centrale interne est totalement ou partiellement rempli de colle de résine ou de matière plastique injectée avec le joint de solidarisation.

A titre de variante de réalisation, la face interne d'au moins un demi-disque comporte une projection axiale d'écartement constituée par une couronne circulaire ou polyédrique, continue ou discontinue, coaxiale au demi-disque et délimitant la zone centrale interne de ladite zone annulaire périphérique.

Selon une première variante le jeton comporte un demi-disque à face interne porteuse d'une couronne formant projection axiale d'écartement associé à un demi-disque à face interne sensiblement plane.

Selon une seconde variante le jeton comporte deux demi-disques à face interne porteuse d'une couronne formant projection axiale d'écartement, lesdites couronnes présentant chacune une crête de contact disposée de préférence sensiblement dans le plan de symétrie XX' du jeton parallèle aux faces externes dudit jeton. Avantageusement les crêtes de contact des couronnes comportent un agencement de lèvres et de rainures en arc de cercle complémentaires pour permettre le pré-assemblage des demi-disques, notamment par emboîtage.

Pour permettre l'introduction de la matière injectée dans la zone centrale interne la couronne d'au moins un demi-disque présente des créneaux ou des canaux traversants pour faire communiquer la zone annulaire périphérique avec la zone centrale interne.

Pour réduire les coûts, améliorer la cohésion du jeton et faciliter le contrôle des retraits lors des opérations d'injection les faces internes des deux demi-disques du jeton comportent des projections axiales en vis à vis et présentant des surfaces de contact de préférence disposées sensiblement dans le plan de symétrie XX' du jeton parallèle aux faces externes dudit jeton. De façon optionnelle les surfaces de contact entre lesdites projections axiales comportent un agencement de plots et logements creux complémentaires pour permettre le pré-assemblage des demi-disques, notamment par emboîtage. Avantageusement les demi-disques du jeton sont identiques.

Selon encore une autre variante du jeton selon l'invention, la face interne d'au moins un demi-disque comporte une pluralité de projections axiales d'écartement constituées de doigts délimitant sensiblement la zone centrale interne, lesdits doigts étant disposés pour maintenir dans la zone centrale interne un disque-insert formant lest ou un insert portant un dispositif électronique.

Selon encore une autre variante du jeton selon l'invention, la face interne de chaque demi-disque comporte une pluralité de projections axiales d'écartement constituées de doigts délimitant sensiblement la zone centrale interne, lesdits doigts présentant un épaulement destiné à maintenir sensiblement au centre de la zone centrale une pastille en résine synthétique incorporant le dispositif électronique.

De façon optionnelle, la face interne d'au moins un demi-disque présente des guides radiaux disposés dans ladite zone annulaire périphérique pour freiner l'écoulement de matière injectée tout autour de ladite zone annulaire périphérique et faciliter le remplissage de la zone centrale interne.

Egalement de façon optionnelle, les demi-disques présentent des faces externes sensiblement planes et comportent des découpes périphériques et/ou traversantes en communication avec ladite zone annulaire périphérique pour permettre à la matière plastique dudit joint de faire surface sur les bords et/ou au travers desdites faces externes et réaliser ainsi des motifs de face pour le jeton. Avantageusement les bords des découpes pratiquées dans les faces externes des demi-disques sont biseautés et noyés dans la matière plastique venant du joint.

Par ailleurs les matières plastiques utilisées pour les demi-disques pour le joint d'une part et pour les deux demi-disques d'autre part sont choisies identiques ou non et sont obtenues à partir d'un polymère de base choisi parmi les suivants:
- le polyacétal et les copolymères d'acétal (POM);
- les polyamides et leurs copolymères;
- les poly(alkylènes térephtalate), notamment le polybutylène térephtalate (PBT);
- les polyuréthannes thermoplastiques (PUR);
- les polymères vinyliques, notamment le polychlorure de vinyle (PVC) ;
- les polyoléfines, notamment les polyéthylènes (PE) et les polypropylènes.

D'autres buts, caractéristiques et avantages apparaîtront à la lecture de la description qui va suivre de plusieurs modes de réalisation de l'invention donnés à titre d'exemples non limitatifs, en référence aux dessins ci-joints dans lesquels:
- la figure 1 représente une vue de face (côté face interne) d'un demi-disque de jeton de jeu selon la présente invention;
- la figure 2 représente une vue en coupe diamétrale selon la ligne A-A d'un jeton de jeu incorporant le demi-disque illustré à la figure 1;
- la figure 3 représente une vue de face (côté face interne) d'un demi-disque d'un autre mode de réalisation de jeton de jeu selon l'invention;
- la figure 4 représente une vue en coupe diamétrale selon la ligne B-B du demi-disque illustré à la figure 3;
- la figure 5 représente une vue de face (côté face interne) d'une variante du demi-disque illustré à la figure 3;
- les figures 6 et 7 représentent chacune une vue de profil (montrant la tranche) d'un jeton incorporant un demi-disque du type illustré à la figure 5;
- la figure 8 représente une vue de face (côté face interne) d'un demi-disque d'un autre mode de réalisation de jeton de jeu selon l'invention;
- la figure 9 représente une vue en coupe diamétrale selon la ligne C-C du demi-disque illustré figure 8;
- la figure 10 représente une vue de face (côté face interne) d'un demi-disque d'un autre mode de réalisation de jeton de jeu selon l'invention;
- la figure 11 représente une vue en coupe diamétrale selon la ligne D-D d'un jeton de jeu incorporant le demi-disque illustré à la figure 10;
- la figure 12 représente une vue de face (côté face externe) d'une variante de jeton selon l'invention;
- la figure 13 représente une vue de profil (montrant la tranche) du jeton illustré à la figure 12;
- la figure 14 représente une vue de face (côté face interne) d'un demi-disque d'un autre mode de réalisation de jeton de jeu selon l'invention;
- la figure 15 représente une vue de face (côté face interne) du demi-disque de la figure 14 après mise en place d'une pastille incorporant un dispositif électronique;
- la figure 16 représente une vue agrandie en coupe diamétrale selon la ligne E-E d'un sous-ensemble de jeton de jeu incorporant le demi-disque et la pastille illustrés à la figure 15;
- la figure 17 représente une vue de face partielle (côté face externe) d'un autre mode de réalisation de jeton de jeu selon l'invention; et
- la figure 18 représente une vue agrandie en coupe diamétrale selon la ligne F-F du jeton de jeu illustré à la figure 17.

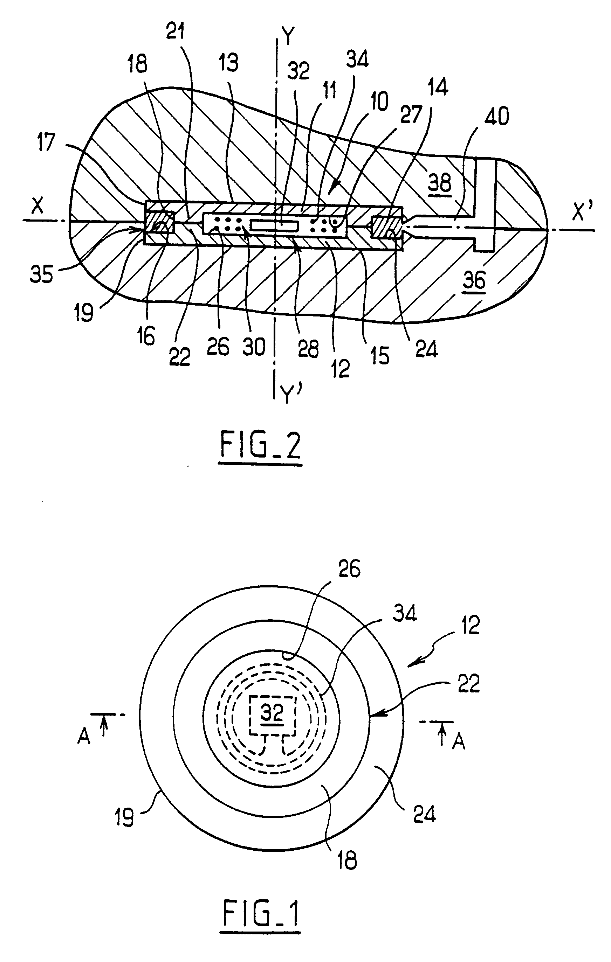

Les figures 1 et 2 concernent un premier mode de réalisation de jeton de jeu selon l'invention. Plus particulièrement, le jeton de jeu 10 comporte deux demi-disques 11 et 12 d'axe YY' solidarisés par un joint en matière plastique 14 injecté sur la tranche 35 du jeton dans une zone annulaire périphérique 16 située entre les deux demi-disques 11 et 12. Dans le mode de réalisation ici décrit à titre d'exemple non limitatif, la zone annulaire périphérique se présente sous la forme d'une gorge. Pour des raisons de coût et de respect des tolérances du jeton (notamment des tolérances concernant la planéité des faces du jeton définitif compte tenu du risque de déformation des faces externes 13 et 15 des demi-disques lors de l'injection du joint 14), les deux demi-disques 11 et 12 sont de préférence identiques en contact selon le plan de symétrie XX' du jeton parallèle aux faces externes 13 et 15 par l'intermédiaire de projections axiales d'écartement (selon l'axe YY' perpendiculaire au jeton 10) constituées dans le cas présent par deux couronnes circulaires 21 et 22 respectivement prévues sur les faces internes des demi-disques 11 et 12, les surfaces d'appui étant définies par les crêtes des couronnes 21 et 22.

Comme illustré sur la figure 1 qui montre une vue de face du demi-disque 12 (côté face interne), la couronne 22 coaxiale au demi-disque 12 sépare une surface annulaire périphérique 24, en réalité une des parois latérales de la gorge 16, d'un évidement central 26 destinée à former avec l'évidement central 27 en vis-à-vis appartenant au demi-disque 11 une zone centrale interne 28 adaptée notamment pour recevoir un insert constitué dans le cas présent par un dispositif électronique à mémoire 30 préenrobé dans une pastille protectrice de résine synthétique, par exemple à base de résine époxy chargée.

En particulier, le dispositif électronique à mémoire 30 comporte un circuit électronique 32 incorporant une mémoire PROM portant des informations concernant le jeton, par exemple un code d'identification fixe numérique ou alphanumérique de 64 bits (comportant un ou plusieurs champs tels que: le numéro de série, l'identification du casino, la valeur numérique du jeton, etc.), et un émetteur-récepteur à antenne périphérique 34 adapté pour être alimenté par couplage inductif. Dans la pratique, l'émetteur-récepteur est susceptible d'échanger sans contact par ondes modulées des données avec un poste de lecture fixe distant d'environ 15 cm, la fréquence de travail se situant entre 10 kHz et 20 MHz. Le dispositif électronique à mémoire permet d'une part de lutter contre les vols et/ou les falsifications des jetons, d'autre part de faciliter la gestion du parc des jetons dans une salle de jeu. Bien entendu sans sortir du cadre de l'invention, le dispositif électronique à mémoire 30 de type non reprogrammable (lecture seule) peut être remplacé par un dispositif reprogrammable à code évolutif avec possibilité de lecture et écriture en mémoire. Enfin, pour des jetons sans protection électronique, la zone centrale interne 28 peut recevoir un simple lest en métal ou être simplement remplie par la matière d'injection du joint chargée en poids ou non.

Les deux demi-disques pour jetons selon l'invention, notamment les demi-disques 11 et 12, sont obtenus par moulage par injection de matière plastique rigide, par exemple à base de polyamide, de PA-6, de PA 6-6 ou d'ABS. Dans le cas présent, on utilise pour le joint 14 le même polymère de base, le polyamide, pour assurer une bonne solidarisation et cohésion entre le joint et les demi-disques lors de l'injection finale (par effet de fusion partielle/soudage). D'une façon générale les matières plastiques utilisées pour les demi-disques d'une part et le joint d'autre part peuvent être choisies parmi les suivantes: le polyacétal et les copolymères d'acétal (POM), les polyamides et leurs copolymères, les poly(alkylènes térephtalate), notamment le polybutylène térephtalate (PBT); les polyuréthannes thermoplastiques (PUR), les polymères vinyliques, notamment le polychlorure de vinyle (PVC), les polyoléfines, notamment les polyéthylènes (PE) et les polypropylènes, ou parmi des couples de polymères susceptibles d'un bon soudage entre eux, de préférence ABS/PMMA, ABS/PBT, PA6/polyuréthanne thermoplastique, PA 6-6/polyuréthanne thermoplastique, polycarbonate/PBT. Bien entendu les compositions peuvent varier notamment les charges incorporées dans les matériaux utilisés pour les demi-disques et le joint de solidarisation, par exemple les charges en poids (baryte, poudres métalliques, oxyde de zinc, etc.) et les charges en colorants (oxyde de zinc, etc.) pour réaliser le marquage de tranche et/ou la teinte du fond des faces externes du jeton (notamment les faces externes 13 et 15 des demi-disques 11 et 12) destinées à recevoir des motifs de décoration par sublimation ou par tampographie, les demi-disques et les joints étant en général réalisés en matières plastiques de couleurs différentes.

La fabrication du jeton 10 se poursuit par la mise en place dans un moule 36, 38 des deux demi-disques 11 et 12 enfermant dans la zone centrale interne centrale 28 le dispositif électronique 30 enrobé dans sa pastille à base de résine époxy chargée et par l'injection du joint 14 sur la tranche 35 du jeton par un ou plusieurs orifices d'injection latéraux 40 avec maintien du contact entre les deux demi-disques par pression sur le moule. Pour améliorer la tenue en assemblage du jeton, les deux demi-disques sont collés ou soudés aux ultrasons au niveau de leurs surfaces de contact 18. De plus de façon optionnelle l'espace libre dans la zone centrale interne 28 est partiellement ou totalement rempli de colle ou de résine époxy pour tenir en place et protéger le dispositif électronique 30. Si nécessaire, la tranche 35 du jeton est surfacée par tournage au sortir de l'injection. A titre d'exemple non limitatif, les jetons de jeu selon l'invention ainsi obtenus se présentent sous la forme d'un disque d'environ 40 mm de diamètre et d'épaisseur comprise entre 3 et 4 mm avec une épaisseur de joint entre le tiers et le cinquième de celle du jeton.

Il est à noter que la structure relativement simple et robuste du jeton selon l'invention constituée par les deux demi-disques 11 et 12 et le joint 14 forme une coque de protection rigide et étanche pour le dispositif d'identification électronique 30. Par ailleurs, sans sortir du cadre de l'invention, le profil de tranche des bords 17 et 19 de la gorge 16 peut être modifié selon des dessins de tranche les plus variés (ondulations, créneaux, zigzag, motifs à boules et/ou à losanges). De plus, il est également possible de modifier le dessin final de la tranche en faisant varier la position angulaire respective des deux demi-disques avant injection (pour faciliter cette opération, notamment la mise en place des demi-disques, il est prévu sur les faces internes des demi-disques, en particulier sur les couronnes 21 et 22, un système d'indexation du type creux et reliefs non représenté).

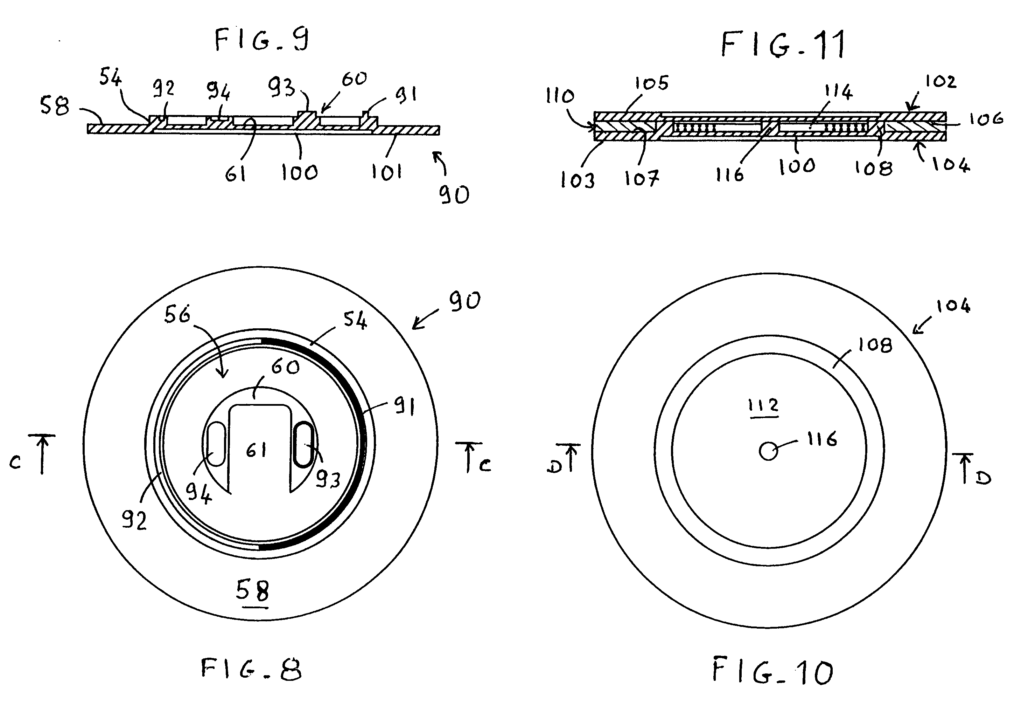

D'une façon générale dans les divers modes de réalisation de l'invention, les deux demi-disques sont à face pleine (sans ouverture centrale de grande dimension susceptible de recevoir un insert) avec des faces externes planes, lisses ou granitées, (voir figures 2, 4, 6, 7 et 13) ou sensiblement planes avec un creusement central de faible profondeur pour accueillir une étiquette de décoration ou un décor tampographié ou sublimé (voir les creusements 100-100' dans les faces externes 101-101', 103-105, 139-139' aux figures 9, 11, 16 et 18).

Par ailleurs, les faces externes des demi-disques des jetons selon l'invention peuvent être marquées lors de l'injection du joint de solidarisation par remplissage, avec la matière colorée du joint, de découpes appropriées dans les demi-disques (de couleur différente à celle du joint) et réalisées au travers de la paroi annulaire périphérique des demi-disques ou du fond de l'évidement central, les découpes représentant des motifs figuratifs divers ou l'inscription du nom du casino et/ou de la valeur du jeton. De façon optionnelle, l'injection du joint peut être réalisée au travers des découpes à partir d'orifices d'injection en position faciale par rapport au jeton.

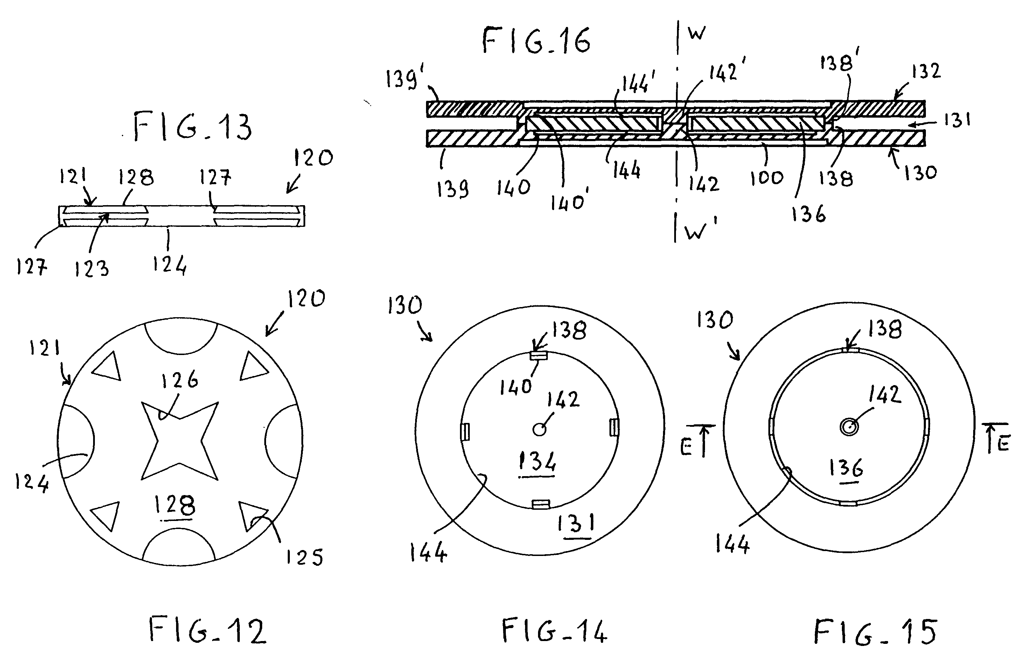

Par exemple le jeton 120 représenté aux figures 12 et 13 comporte deux demi-disques 121 et 122 à projections axiales d'écartement (non visibles sur les figures) et solidarisés par un joint de tranche 123. Le jeton 120 montre un exemple de motifs figuratifs de face géométriques avec des découpes réalisées dans les demi-disques 121 et 122 (seule la face externe 128 du demi-disque 121 est représentée sur la figure 12), ces découpes étant périphériques 124 en bordure de jeton et/ou traversantes en position latérale (découpes 125 en communication directe avec la zone annulaire périphérique) et/ou en position centrale (découpe 126 en communication avec la zone centrale interne prévue sans insert et en communication avec la zone annulaire périphérique par passages appropriés entre ou au travers des projections axiales d'écartement). Lors de l'injection du joint 123 l'espace libre des découpes 124, 125 et 126 est rempli par la matière colorée du joint, le cheminement de cette matière se faisant par écoulement entre les deux demi-disques 121 et 122. De préférence, les bords 127 des découpes 124, 125 et 126 sont biseautés et noyés dans la matière plastique du joint 123 pour assurer un verouillage entre le joint 123 et les demi-disques 121 et 122 (voir figure 13).

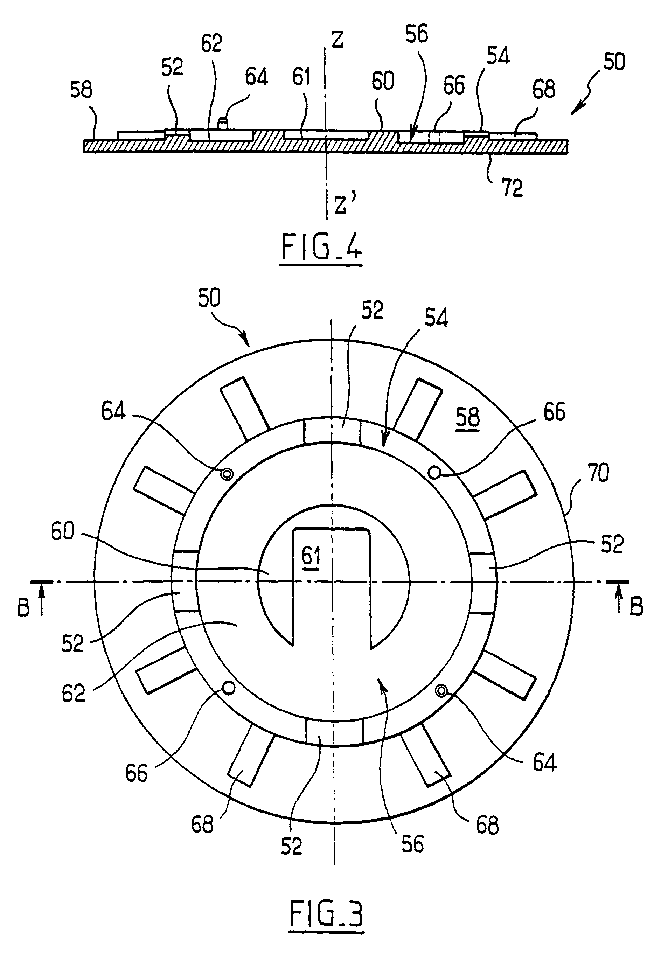

Les figures 3 et 4 représentent les vues de face et en coupe d'un demi-disque 50 d'un autre mode de réalisation de jeton selon l'invention, toutefois assez proche du demi-disque 12 du jeton 10 décrit ci-avant en référence aux figures 1 et 2. Ainsi, la description des éléments similaires des demi-disques 12 et 50 ne sera pas reprise en détails. Le demi-disque 50 présente une face externe plane 72 et une face interne (illustrée figure 3) portant une projection axiale d'écartement (selon l'axe ZZ' perpendiculaire au jeton) constituée par la couronne 54. Les différences essentielles entre les demi-disques 12 et 50 résultent d'une part de la présence de quatre créneaux 52 au travers de la couronne 54 et répartis régulièrement sur celle-ci (voir figure 3) de façon à faire communiquer l'évidement 56 (formant la moitié de la zone centrale interne) avec la zone annulaire périphérique destinée à recevoir le joint de solidarisation et bordée par la surface annulaire périphérique 58, d'autre part par la présence au centre de l'évidement 56 d'un ressaut 60 en forme de U (réalisant une seconde projection axiale d'écartement pour le demi-disque 50 disposée dans la zone centrale interne 56) destiné à former un logement 61 pour le circuit électronique à mémoire (non représenté) d'un dispositif électronique d'identification (non enrobé mais protégé par un vernis résistant à la chaleur) et laissant un espace annulaire 62 destiné à recevoir l'antenne périphérique. Si nécessaire le dispositif électronique (comme tout autre insert) est maintenu en place dans la zone centrale interne par de la colle ou de la résine. Par ailleurs, la couronne 54 porte deux pions axiaux 64 et deux logements creux complémentaires 66 répartis alternativement à angle droit et symétriquement par rapport à l'axe ZZ' du demi-disque 50 pour coopérer avec les pions et logements de l'autre demi-disque (non représenté) et permettre le préassemblage des deux demi-disques formant la structure de base du jeton. Enfin le demi-disque 50 présente sur sa face interne des guides radiaux (ou pattes) 68 dans le cas présent d'épaisseur axiale inférieure à celle de la couronne 54 et disposés de part et d'autre des créneaux 52. Dans le mode de réalisation ici décrit à titre d'exemple non limitatif, les guides 68 se projettent radialement dans la demi-gorge bordée par la surface annulaire périphérique 58 à partir de la couronne 54 sans atteindre le bord 70 du demi-disque 50 correspondant à la tranche du jeton. Les guides 68 qui peuvent se présenter sous d'autres formes et dans d'autres dimensions ont pour fonction de freiner l'écoulement de matière autour de la zone annulaire périphérique bordée par les surfaces annulaires périphériques (surface 58 pour le demi-disque 50) lors de l'injection du joint de tranche pour diriger en priorité la matière injectée vers les créneaux 52 pour remplir l'évidement 56 et ainsi la zone centrale interne et ainsi noyer le circuit électronique et l'antenne logée dans la matière plastique du joint.

La fabrication du jeton selon le second mode de réalisation de l'invention s'obtient par injection de deux demi-disques identiques conformes au demi-disque 50, par la mise en place dans un moule semblable au moule 36-38 des deux demi-disques pré-assemblés enfermant le dispositif électronique et son antenne (l'indexation angulaire étant obtenue par le biais des pions 64 et des logements 66), et par l'injection du joint de solidarisation périphérique à partir d'un ou plusieurs orifices sur la tranche du jeton.

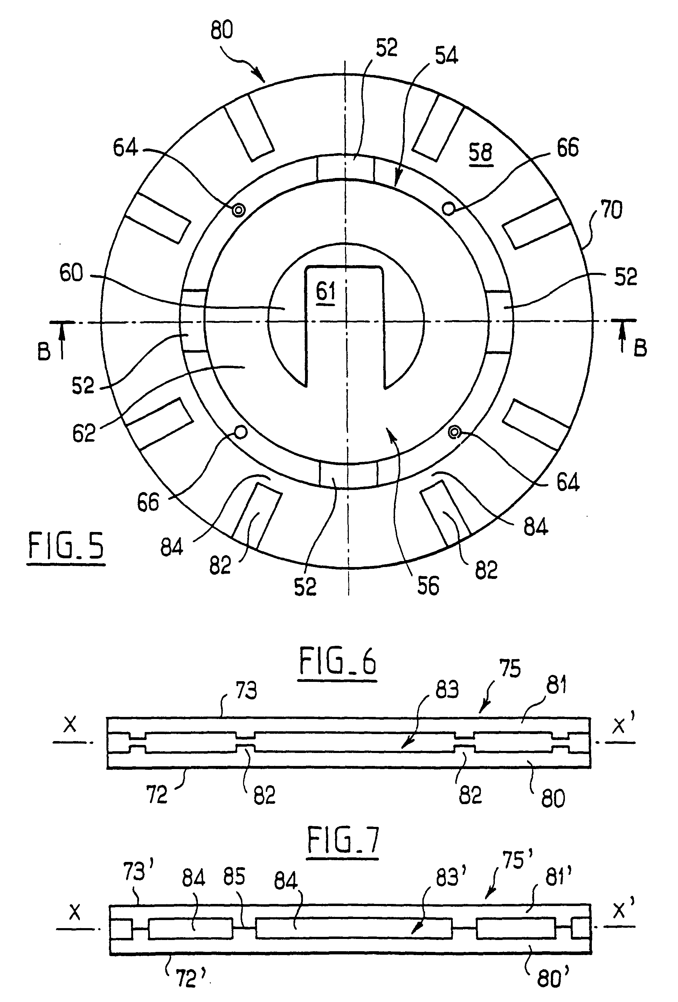

Les figures 5 à 7 concernent deux autres jetons selon l'invention réalisés à partir de demi-disques identiques très proches de celui illustré sur les figures 3 et 4, les éléments identiques (qui ne seront pas décrits à nouveau) portant les mêmes références numériques.

Dans le demi-disque 80 illustré à la figure 5 les guides (ou pattes) radiaux 82 s'étendent à partir du bord 70 du demi-disque laissant un espace radial 84 le long de la couronne 54 pour former un passage et assurer la continuité circulaire du joint annulaire injecté. Il est ainsi possible d'obtenir pour les jetons finis un marquage de tranche crénelé (voir sur la figure 6 le jeton 75 avec un joint crénelé 83 entre les demi-disques 80 et 81 dans le cas où l'épaisseur axiale des guides 82 est inférieure à celle de la couronne 54 ) ou un marquage de tranche à fenêtres séparées (voir sur la figure 7 le jeton 75' avec un joint 83' entre les deux demi-disques 80' et 81' constitué des fenêtres 84 dans le cas où l'épaisseur axiale des guides 82 est égale à celle de la couronne 54, la surface de contact 85 entre les deux demi-disques 80' et 81' correspondant à la surface d'appui entre ces derniers et disposée dans le plan de symétrie XX' du jeton étant susceptible de ne plus être visible après l'injection finale).

L'invention n'est pas limitée à l'utilisation de demi-disques identiques et couvre diverses variantes dans lesquelles les bords des demi-disques ont des profils différents pour obtenir des motifs de tranche les plus variés. Toutefois, il est souvent avantageux pour équilibrer les retraits lors de l'injection finale et assurer une bonne planéité des faces du jeton ainsi obtenu de maintenir les surfaces d'appui et de contact 18 des projections axiales d'écartement entre les deux demi-disques dans le plan de symétrie XX' du jeton parallèle aux faces externes planes de celui-ci (faces 13, 15 pour le jeton 10, faces 72, 73 pour le jeton 75 et faces 72', 73' pour le jeton 75').

Les figures 8 et 9 concernent une autre variante de jeton selon l'invention réalisée à partir de deux demi-disques identiques 90 proches de celui illustré sur les figures 3 et 4, les éléments semblables ou équivalents (qui ne seront pas décrits à nouveau) portant les mêmes références numériques.

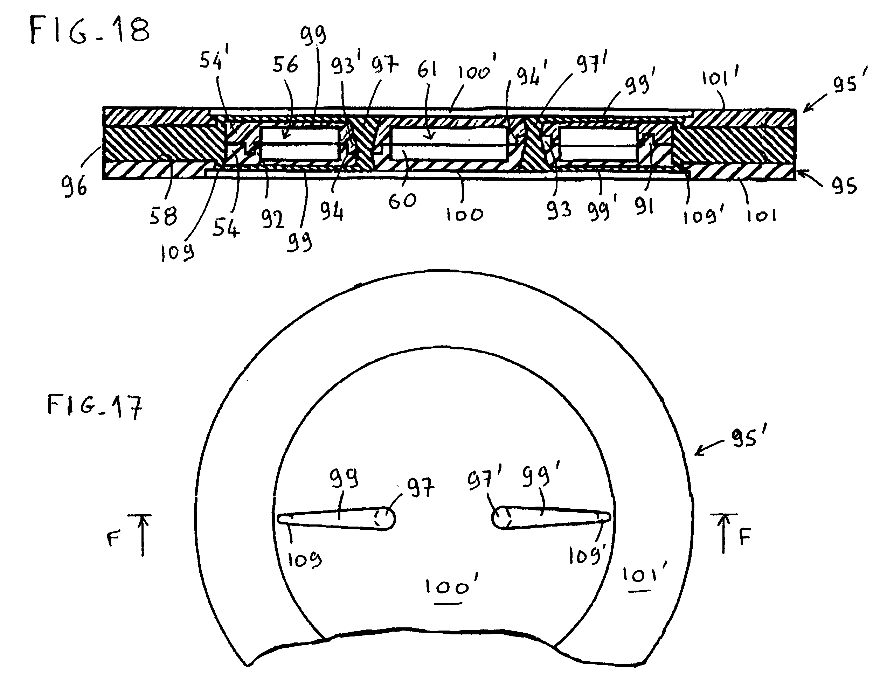

Dans le demi-disque 90 illustré à la figure 8, la couronne circulaire 54 est continue de façon à délimiter et isoler la zone annulaire périphérique (bordée par la surface 58) de la zone centrale interne au jeton (constituée pour moitié par l'évidement 56). La crête de contact de chaque couronne 54 (une par demi-disque), en l'espèce disposée dans le plan de symétrie du jeton XX' du jeton, comporte un agencement de lèvre 91 (représentée en trait épais sur la figure 8) et rainure 92 en arc de cercle complémentaires pour permettre le pré-assemblage des demi-disques 90 par emboîtage. De même la seconde projection axiale d'écartement du demi-disque 90 constituée par le ressaut 60 situé dans la zone centrale interne 56 comporte un agencement de plot 93 (représentée en trait épais sur la figure 8) et de logement creux 94 complémentaires destinés également à coopérer par emboîtage lors du pré-assemblage du jeton. Comme on peut le voir sur les figures 8 et 9, les demi-disques 90 ne comportent pas de guides radiaux et la zone centrale interne 56, isolée du joint de solidarisation par les couronnes 54, peut être, après la mise en place du dispositif électronique d'identification à mémoire, partiellement ou totalement remplie de colle ou de résine. Les figures 17 et 18 illustrent une variante du jeton incorporant le demi-disque 90 montré aux figures 8 et 9, variante selon laquelle les demi-disques 95, 95' comportent au travers des plots 93, 93' et des logements creux 94, 94' des passages axiaux traversants 97 et 97' à bords évasés vers les faces externes 101 et 101' en communication avec la zone annulaire périphérique 58 recevant le joint annulaire 96 par des rainures radiales 99 et 99' réalisées dans le fond des creusements 100 et 100' et des orifices 109 et 109' débouchant au fond du joint 96 (comme illustré sur la figure 18). Lors de l'injection du joint 96, toujours réalisée par la tranche du jeton, le flux de matière s'écoule par les orifices 109-109'et les rainures 99-99' pour remplir les passages axiaux 97-97' et verrouiller une liaison additionnelle entre les deux demi-disques 95-95' (plus proche du centre du jeton que le joint lui-même) située au niveau de la projection axiale d'écartement 60 au coeur de la zone centrale interne 56. De plus la zone centrale interne 56 est bien isolée du joint 96 par les couronnes 54-54' et le dispositif électronique à mémoire.

Les figures 10 et 11 concernent une autre variante de jeton selon l'invention réalisée à partir de demi-disques non identiques 102 et 104. Le demi-disque 102 présente une face interne 106 sensiblement plane tandis que le demi-disque 104, assez proche de celui illustré sur les figures 1 et 2, présente sur sa face interne 107 une couronne d'écartement 108 continue venant directement en appui sur la face interne 106 du demi-disque 102 et dont la hauteur axiale représente sensiblement l'épaisseur du joint de solidarisation 110. La couronne 108 isole la zone annulaire périphérique occupée par le joint 110 de la zone centrale interne 112 dans laquelle est mise en place la pastille 114 incorporant le dispositif électronique (avec remplissage éventuel de l'espace libre par de la colle ou de la résine) . En variante, la face interne 107 du demi-disque 104 présente une autre projection axiale d'écartement, un pion central 116 en contact avec la face interne 106 du demi-disque 102.

Dans les diverses variantes de l'invention les couronnes formant les projections axiales d'écartement peuvent être circulaires, continues ou discontinues, coaxiales aux demi-disques mais également polyédriques, de préférence selon un polyèdre régulier, carré, hexagone, etc...

Les figures 14, 15 et 16 concernent une autre variante de jeton selon l'invention réalisée à partir de demi-disques identiques 130 et 132. En particulier la figure 16 montre une coupe diamétrale (selon E-E) d'un sous ensemble pré-assemblé avant injection du joint de solidarisation dans la zone annulaire périphérique 131, les deux demi-disques 130, 132 maintenant dans la zone centrale interne 134 une pastille 136 incorporant un dispositif électronique d'identification à mémoire. Les figures 14 et 15 montrent une vue de la face interne du demi-disque 130 respectivement sans la pastille 136 et avec la pastille 136. Comme illustré sur les figures 14 et 16, la zone centrale interne 134 est délimitée de la zone annulaire périphérique 131 par une pluralité de projections axiales d'écartement 138, 138' sur la face interne de chaque demi-disque 130 et 132 et constituées de doigts répartis en couronne coaxialement à l'axe du jeton WW'. Les doigts 138, 138' sont susceptibles d'accueillir un insert lest ou dispositif électronique d'identification. Dans le cas présent la pastille 136 est maintenue au centre de la zone centrale interne 134 par coopération avec des épaulements 140, 140' prévus sur les quatre doigts 138, 138' de chaque demi-disque 130, 132. La pastille 136 est percée en son centre pour laisser le passage à deux autres projections axiales d'écartement 142, 142' disposées en position centrale sur l'axe WW'. Pour faciliter le remplissage de l'espace libre dans la zone centrale interne 134 lors de l'injection du joint et le recouvrement total de la pastille 136, un évidemment circulaire 144, 144' d'un diamètre légèrement supérieur à celui prévu pour la pastille 136 (ou pour tout autre insert) est réalisé sur la face interne de chaque demi-disque 130, 132, sensiblement à la hauteur des doigts 138, 138'. Si nécessaire, des guides radiaux du type illustré aux figures 3 à 5 sont prévus sur les faces internes 106, 107 des demi-disques dans la zone annulaire périphérique 131. Bien entendu, d'autres variantes de jetons selon l'invention comportent des doigts en nombre variable et de forme et de disposition variables.

## Revendications

1. Jeton de jeu en forme générale de disque, ou dispositif analogue représentatif d'une valeur nominale prédéterminée ou non, comportant deux demi-disques en matière plastique rigide (11-12, 50, 80-81, 80'-81', 90, 102-104, 121-122 ,130-132) solidarisés l'un à l'autre par injection de matière plastique, les deux demi-disques (11-12, 50, 80-81, 80'-81', 90, 102-104, 121-122, 130-132) étant en contact par l'intermédiaire d'au moins une projection axiale d'écartement (22, 54, 108, 138) prévue sur au moins une des faces internes des demi-disques de façon à définir entre ces derniers une zone périphérique en tout ou partie annulaire (16, 131) débouchant sur la tranche du jeton, caractérisé en ce que :
- les deux demi-disques (11-12, 50, 80-81, 80'-81', 90, 102-104, 121-122, 130-132) sont à faces pleines ou à faces sensiblement pleines, les faces internes des demi-disques définissant entre elles une zone centrale interne (28, 56, 112, 134) dans le jeton destinée à accueillir un insert et/ou une matière de remplissage, et en ce que
- les deux demi-disques sont solidarisés par un joint de solidarisation en matière plastique (14, 83, 83', 110) déposé par injection dans ladite zone annulaire périphérique (16, 131).

2. Jeton de jeu selon la revendication 1, caractérisé en ce qu'il comporte un insert se présentant sous la forme d'un dispositif électronique (30, 114, 136) et disposé dans ladite zone centrale interne (28,56, 112, 134) entre les deux demi-disques (11-12, 102-104, 130-132) soit directement, soit encapsulé dans un boîtier ou enrobé dans une pastille de résine synthétique protectrice.

3. Jeton de jeu selon la revendication 2, caractérisé en ce que le dispositif électronique (30, 114, 136) comporte un circuit électronique (32) incorporant une mémoire portant des informations concernant le jeton, par exemple un code d'identification, et un émetteur-récepteur à antenne périphérique (34) adapté pour être alimenté par couplage inductif.

4. Jeton de jeu selon la revendication 1, caractérisé en ce qu'il comporte un insert se présentant sous la forme d'un lest en métal disposé dans ladite zone centrale interne entre les deux demi-disques.

5. Jeton de jeu selon l'une des revendications 2 à 4, caractérisé en ce que ledit insert (30, 114, 136) est maintenu en position dans la zone centrale interne par de la colle ou de la résine.

6. Jeton de jeu selon l'une des revendications 1 à 5, caractérisé en ce que au moins un demi-disque (12, 50, 80, 90, 104) présente un évidement central (26, 56) sur sa face interne pour former tout ou partie de la zone centrale interne (28, 56, 112, 134) dans le jeton.

7. Jeton de jeu selon l'une des revendications 1 à 6, caractérisé en ce que la face interne d'au moins un demi-disque (12, 50, 80, 90, 104) comporte une projection axiale d'écartement constituée par une couronne circulaire ou polyédrique, continue ou discontinue, coaxiale (21, 22, 54, 108) au demi-disque (12, 50, 80, 90, 104) et délimitant la zone centrale interne à partir de ladite zone annulaire périphérique.

8. Jeton de jeu selon la revendication 7, caractérisé en ce qu'il comporte deux demi-disques (12, 50) à face interne porteuse d'une couronne (22, 54) formant projection axiale d'écartement, lesdites couronnes (22, 54) présentant chacune une crête de contact (18) disposée de préférence sensiblement dans le plan de symétrie XX' du jeton parallèle aux faces externes (13-15, 72-73, 101) dudit jeton.

9. Jeton de jeu selon la revendication 8, caractérisé en ce que les crêtes de contact des couronnes (54) comportent un agencement de lèvres (91) et de rainures (92) en arc de cercle complémentaires pour permettre le pré-assemblage des demi-disques (90), notamment par emboîtage.

10. Jeton de jeu selon l'une des revendications 1 à 9, caractérisé en ce que les deux demi-disques (11-12, 80-81, 80'-81', 130-132) du jeton (10, 75-75') sont identiques.

11. Jeton de jeu selon la revendication 7, caractérisé en ce qu'il comporte un demi-disque (104) à face interne (107) porteuse d'une couronne (108) formant projection axiale d'écartement associé à un demi-disque (102) à face interne (106) sensiblement plane.

12. Jeton de jeu selon l'une des revendications 7 à 11, caractérisé en ce que la couronne (54) d'au moins un demi-disque présente des créneaux (52) ou des canaux traversants pour faire communiquer la zone annulaire périphérique (16, 58) avec la zone centrale interne (28, 56).

13. Jeton de jeu selon l'une des revendications 1 à 5 caractérisé en ce que les faces internes des deux demi-disques (11-12, 80-81, 80'-81', 130-132) du jeton comportent des projections axiales (18, 85, 138-138') en vis à vis et présentant des surfaces de contact de préférence disposées sensiblement dans le plan de symétrie XX' du jeton parallèle aux faces externes (13-15, 72-73, 72'-73', 139-139') dudit jeton.

14. Jeton de jeu selon la revendication 13, caractérisé en ce que les surfaces de contact entre lesdites projections axiales (54, 60) comportent un agencement de plots (64, 93) et logements creux (66, 94) complémentaires pour permettre le pré-assemblage des demi-disques (50, 80, 90), notamment par emboîtage.

15. Jeton de jeu selon la revendication 14 caractérisé en ce que les demi-disques (95-95') à la hauteur des plots (93) et des logements creux (94) comportent des passages axiaux traversants (97-97') évasés vers des faces externes (101-101') des demi-disques et adaptés pour recevoir de la matière plastique injectée avec le joint de solidarisation (96).

16. Jeton de jeu selon l'une des revendications 1 à 5 caractérisé en ce que la face interne d'au moins un demi-disque (130-132) comporte une pluralité de projections axiales d'écartement constituées de doigts (138-138') délimitant sensiblement la zone centrale interne (134), lesdits doigts (138-138') étant disposés pour maintenir dans la zone centrale interne un disque-insert formant lest ou un insert portant un dispositif électronique.

17. Jeton de jeu selon l'une des revendications 1 à 3 caractérisé en ce que la face interne de chaque demi-disque (130-132) comporte une pluralité de projections axiales d'écartement constituées de doigts (138-138') délimitant sensiblement la zone centrale interne (134), lesdits doigts (138-138') présentant un épaulement destiné à maintenir sensiblement au centre de la zone centrale interne une pastille en résine synthétique (136) incorporant le dispositif électronique.

18. Jeton de jeu selon l'une des revendications 1 à 17, caractérisé en ce que la face interne (103) d'au moins un demi-disque (104, 130-132) comporte une projection axiale d'écartement (116, 142-142') disposée dans la zone centrale interne (112, 136), de préférence en position centrale de ladite face.

19. Jeton de jeu selon l'une des revendications 1 à 17, caractérisé en ce que l'espace libre dans la zone centrale interne (112, 134) est totalement ou partiellement rempli de colle, de résine ou de matière plastique injectée avec ledit joint de solidarisation.

20. Jeton de jeu selon l'une des revendications 12, 16, 17 et 19, caractérisé en ce que la face interne d'au moins un demi-disque (50, 80) présente des guides radiaux (68, 82) disposés dans ladite zone annulaire périphérique (58) pour freiner l'écoulement de matière injectée tout autour de ladite zone annulaire périphérique (58) et faciliter le remplissage de la zone centrale interne (28, 56).

21. Jeton de jeu selon l'une des revendications précédentes, caractérisé en ce que les demi-disques (121-122) présentent des faces externes (128) sensiblement planes et comportent des découpes périphériques (124) et/ou traversantes (125, 126) en communication avec ladite zone annulaire périphérique pour permettre à la matière plastique dudit joint (123) de faire surface sur les bords et/ou au travers desdites faces externes (128) et de réaliser ainsi des motifs de face pour le jeton.

22. Jeton de jeu selon la revendication 21, caractérisé en ce que les bords (127) des découpes ( 124, 125, 126) pratiquées dans les faces externes (128) des demi-disques (121-122) sont biseautés et noyés dans la matière plastique venant du joint (123).

23. Jeton de jeu selon l'une des revendications précédentes, caractérisé en ce que les matières plastiques utilisées pour le joint (14, 83, 110, 123) d'une part et pour les deux demi-disques (11-12, 80-81, 80'-81', 102-104, 121-122, 130-132) d'autre part sont choisies identiques ou non et sont obtenues à partir d'un polymère de base choisi parmi les suivants:
- le polyacétal et les copolymères d'acétal (POM);
- les polyamides et leurs copolymères;
- les poly(alkylènes térephtalate), notamment le polybutylène térephtalate (PBT);
- les polyuréthannes thermoplastiques (PUR);
- les polymères vinyliques, notamment le polychlorure de vinyle (PVC);
- les polyoléfines, notamment les polyéthylènes (PE) et les polypropylènes.

## Claims

1. Gambling chip having the general shape of a disc, or similar device representing a nominal value which may or may not be predetermined, including two half-discs made of rigid plastic (11-12, 50, 80-81, 80'-81', 90, 102-104, 121-122, 130-132) which are fastened to each other by injection of plstic, the two half-discs (11-12, 50, 80-81, 80'-81', 90, 102-104, 121-122, 130-132) being in contact via at least one axial separating projection (22, 54, 108, 138) provided on at least one of the internal faces of the half-discs so as to define between the latter a completely or partly annular peripheral region (16, 131) emerging on the side of the chip, characterized in that:
- the two half-discs (11-12, 50, 80-81, 80'-81', 90, 102-104, 121-122, 130-132) have solid faces or substantially solid faces, the internal faces of the half-discs defining between them an internal central region (28, 56, 112, 134) in the chip, the said region being designed to accommodate an insert and/or a filling material, and in that
- the two half-discs are fastened together by a plastic fastening seal (14, 83, 83' 110) deposited by injection into the said peripheral annular region (16, 131).

2. Gambling chip according to Claim 1, characterized in that it includes an insert in the form of an electronic device (30, 114, 136) and arranged in the said internal central region (28, 56, 112, 134) between the two half-discs (11-12, 102-104, 130-132) either directly or encapsulated in a package or embedded in a wafer of protective synthetic resin.

3. Gambling chip according to Claim 2, characterized in that the electronic device (30, 114, 136) includes an electronic circuit (32) incorporating a memory carrying information regarding the chip, for example an identification code, and a transmitter/ receiver having a peripheral antenna (34) designed to be powered by inductive coupling.

4. Gambling chip according to Claim 1, characterized in that it includes an insert which is in the form of a metal ballast placed in the said internal central region beween the two half-discs.

5. Gambling chip according to one of Claims 2 to 4, characterized in that the said insert (30, 114,136) is held in position in the internal central region by adhesive or resin.

6. Gambling chip according to one of Claims 1 to 5, characterized in that at least one half-disc (12, 50, 80, 90, 104) has a central recess (26, 56) on its internal face in order to form all or part of the internal central region (28, 56, 112, 134) in the chip.

7. Gambling chip according to one of Claims 1 to 6, characterized in that the internal face of at least one half-disc (12, 50, 80, 90, 104) includes an axial separating projection consisting of a continuous or discontinuous, circular or polyhedral ring (21, 22, 54, 108) coaxial with the half-disc (12, 50, 80, 90, 104) and delimiting the internal central region from the said peripheral annular region.

8. Gambling chip according to Claim 7, characterized in that it includes two half-discs (12, 50) having an internal face which carries a ring (22, 54) forming an axial separating projection, the said rings (22, 54) each having a contacting top surface (18) preferably arranged substantially in the plane of symmetry XX' of the chip parallel to the external faces (13-15, 72-73, 101) of the said chip.

9. Gambling chip according to Claim 8, characterized in that the contacting top surfaces of the rings (54) include an arrangement of circularly arcuate lips (91) and grooves (92) which are complementary in order to allow pre-assembly of the half-discs (90), especially by interlocking.

10. Gambling chip according to one of Claims 1 to 9, characterized in that the two half-discs (11-12, 80-81, 80'-81', 130-132) of the chip (10, 75-75') are identical.

11. Gambling chip according to Claim 7, characterized in that it includes a half-disc (104) having an internal face (107) which carries a ring (108) forming an axial separating projection and is associated with a half-disc (102) having a substantially plane internal face (106).

12. Gambling chip according to one of Claims 7 to 11, characterized in that the ring (54) of at least one half-disc has through channels or slots (52) in order to make the peripheral annular region (16, 58) communicate with the internal central region (28, 56).

13. Gambling chip according to one of Claims 1 to 5, characterized in that the internal faces of the two half-discs (11-12, 80-81, 80'-81', 130-132) of the chip include axial projections (18, 85, 138-138') opposite each other and having contact surfaces preferably arranged substantially in the plane of symmetry XX' of the chip parallel to the external faces (13-15, 72-73, 72'-73', 139-139') of the said chip.

14. Gambling chip according to Claim 13, characterized in that the contact surfaces between the said axial projections (54, 60) include an arrangement of studs (64, 93) and hollow housings (66, 94) which are complementary in order to allow pre-assembly of the half-discs (50, 80, 90), especially by interlocking.

15. Gambling chip according to Claim 14, characterized in that the half-discs (95-95'), at the height of the studs (93) and of the hollow housings (94), include axial through passages (97-97') flared outwards towards the external faces (101-101') of the half-discs and designed to take the plastic injected with the fastening seal (96).

16. Gambling chip according to one of Claims 1 to 5, characterized in that the internal face of at least one half-disc (130-132) includes a plurality of axial separating projections consisting of fingers (138-138') substantially delimiting the internal central region (134), the said fingers (138-138') being arranged so as to hold in place in the internal central region a ballast-forming insert disc or a disc carrying an electronic device.

17. Gambling chip according to one of Claims 1 to 3, characterized in that the internal face of each half-disc (130-132) includes a plurality of axial separating projections consisting of fingers (138-138') substantially delimiting the internal central region (134), the said fingers (138-138') having a shoulder intended to hold substantially in place at the centre of the internal central region a wafer (136) made of synthetic resin and incorporating the electronic device.

18. Gambling chip according to one of Claims 1 to 17, characterized in that the internal face (103) of at least one half-disc (104, 130-132) includes, an axial separating projection (116, 142-142') arranged in the internal central region (112, 136), preferably in a central position on the said face.

19. Gambling chip according to one of Claims 1 to 17, characterized in that the free space in the internal central region (112, 134) is completely or partially filled with adhesive, resin, or plastic injected with the fastening seal.

20. Gambling chip according to one of Claims 12, 16 17 and 19, characterized in that the internal face of at least one half-disc (50, 80) has radial guides (68, 82) arranged in the said peripheral annular region (58) in order to retard a flow of substance injected all around the said peripheral annular region (58) and to make it easier to fill the internal central region (28, 56).

21. Gambling chip according to one of the preceding claims, characterized in that the half-discs (121-122) have substantially plane external faces (128) and include peripheral cut-outs (124) and/or through cut-outs (125, 126) in communication with the said peripheral annular region in order to allow the plastic of the said seal (123) to come to the surface on the edges and/or through the said external faces (128) and thus to produce face patterns for the chip.

22. Gambling chip according to Claim 21, characterized in that the edges (127) of the cut-outs (124, 125, 126) made in the external faces (128) of the half-discs (121-122) are bevelled and sunk into the plastic coming from the seal (123).

23. Gambling chip according to one of the preceding claims, characterized in that the plastics used, on the one hand, for the seal (14, 83, 110, 123) and, on the other hand, for the two half-discs (11-12, 80-81, 80'-81', 102-104, 121-122, 130-132) may or may not be chosen so as to be identical and are obtained from a base polymer chosen from the following polymers:
- polyacetal and acetal copolymers (POM);
- polyamides and their copolymers;
- poly(alkylene terephthalate) polymers, especially polybutylene terephthalate (PBT);
- thermoplastic polyurethanes (PUR);
- vinyl polymers, especially polyvinyl chloride (PVC); and
- polyolefins, especially polyethylenes (PE) and polypropylenes.

## Patentansprüche

1. Allgemein scheibenförmige Spielmarke oder analoge Vorrichtung, die einen gegebenenfalls vorbestimmten Nennwert darstellt, bestehend aus zwei Scheibenhälften (11-12, 50, 80-81, 80'-81', 90, 102-104, 121-122, 130-132) aus starrem Kunststoff, die durch Spritzen von Kunststoff fest miteinander verbunden sind, wobei sich die beiden Scheibenhälften (11-12, 50, 80-81, 80'-81', 90, 102-104, 121-122, 130-132) mittels mindestens eines axialen Abstandsvorsprungs (22, 54, 108, 138) berühren, der an mindestens einer der Innenflächen der Scheibenhälften vorgesehen ist, so daß er zwischen diesen letzteren einen ganz oder teilweise ringförmigen Umfangsbereich (16, 131) definiert, der in den Rand der Marke mündet, dadurch gekennzeichnet, daß
- die beiden Scheibenhälften (11-12, 50, 80-81, 80'-81', 90, 102-104, 121-122, 130-132) ebene oder im wesentlichen ebene Flächen aufweisen, wobei die Innenflächen der Scheibenhälften zwischen sich einen inneren Mittelbereich (28, 56, 112, 134) in der Marke definieren, der einen Einsatz und/oder einen Füllstoff aufnehmen soll, und daß
- die beiden Scheibenhälften durch eine Verbindungsfuge (14, 83, 83', 110) aus Kunststoff, die durch Spritzen in den ringförmigen Umfangsbereich (16, 131) eingebracht wird, fest miteinander verbunden sind.

2. Spielmarke nach Anspruch 1, dadurch gekennzeichnet, daß sie einen Einsatz in Form einer elektronischen Vorrichtung (30, 114, 136) aufweist, der in dem inneren Mittelbereich (28, 56, 112, 134) zwischen den beiden Scheibenhälften (11-12, 102-104, 130 - 132) entweder direkt, in einem Gehäuse eingekapselt oder von einer Schutztablette aus Kunstharz umgeben angeordnet ist.

3. Spielmarke nach Anspruch 2, dadurch gekennzeichnet, daß die elektronische Vorrichtung (30, 114, 136) eine elektronische Schaltung (32) mit einem Speicher, der die Marke betreffende Informationen, zum Beispiel einen Identifizierungscode, enthält, und einen Sender-Empfänger mit einer Umfangsantenne (34), die zur Versorgung durch induktive Kopplung ausgeführt ist, aufweist.

4. Spielmarke nach Anspruch 1, dadurch gekennzeichnet, daß sie einen Einsatz in Form eines Metallballasts enthält, der in dem inneren Mittelbereich zwischen den beiden Scheibenhälften angeordnet ist.

5. Spielmarke nach einem der Ansprüche 2 bis 4, dadurch gekennzeichnet, daß der Einsatz (30, 114, 136) durch Klebstoff oder Harz in dem inneren Mittelbereich festgehalten wird.

6. Spielmarke nach einem der Ansprüche 1 bis 5, dadurch gekennzeichnet, daß mindestens eine Scheibenhälfte (12, 50, 80, 90, 104) an ihrer Innenfläche eine mittlere Aussparung (26, 56) enthält, die den inneren Mittelbereich (28, 56, 112, 134) in der Marke ganz oder teilweise bildet.

7. Spielmarke nach einem der Ansprüche 1 bis 6, dadurch gekennzeichnet, daß die Innenfläche mindestens einer Scheibenhälfte (12, 50, 80, 90, 104) einen axialen Abstandsvorsprung aufweist, der durch einen runden oder polyedrischen, durchgehenden oder unterbrochenen, zur Scheibenhälfte (12, 50, 80, 90, 104) koaxialen Kranz (21, 22, 54, 108) gebildet wird, der den inneren Mittelbereich von dem ringförmigen Umfangsbereich aus begrenzt.

8. Spielmarke nach Anspruch 7, dadurch gekennzeichnet, daß sie zwei Scheibenhälften (12, 50) mit einer einen den axialen Abstandsvorsprung bildenden Kranz (22, 54) tragenden Innenfläche enthält, wobei die Kränze (22, 54) jeweils einen Kontaktsteg (18) aufweisen, der vorzugsweise im wesentlichen in der Symmetrieebene XX' der Marke parallel zu den Außenflächen (13-15, 72-73, 101) der Marke angeordnet ist.

9. Spielmarke nach Anspruch 8, dadurch gekennzeichnet, daß die Kontaktstege der Kränze (54) eine aus komplementären Lippen (91) und Nuten (92) bestehende kreisbogenförmige Anordnung enthalten, um ein Vormontieren der Scheibenhälften (90), insbesondere durch Ineinanderschieben, zu gestatten.

10. Spielmarke nach einem der Ansprüche 1 bis 9, dadurch gekennzeichnet, daß die beiden Scheibenhälften (11-12, 80-81, 80'-81', 130-132) der Marke (10, 75-75') identisch sind.

11. Spielmarke nach Anspruch 7, dadurch gekennzeichnet, daß sie eine Scheibenhälfte (104) enthält, deren Innenfläche (107) einen Kranz (108) trägt, der einen einer Scheibenhälfte (102) mit im wesentlichen ebener Innenfläche (106) zugeordneten axialen Abstandsvorsprung bildet.

12. Spielmarke nach einem der Ansprüche 7 bis 11, dadurch gekennzeichnet, daß der Kranz (54) mindestens einer Scheibenhälfte Durchgangskerben (52) oder -kanäle aufweist, die den ringförmigen Umfangsbereich (16, 58) mit dem inneren Mittelbereich (28, 56) verbinden.

13. Spielmarke nach einem der Ansprüche 1 bis 5, dadurch gekennzeichnet, daß die Innenflächen der beiden Scheibenhälften (11-12, 80-81, 80'-81', 130-132) der Marke einander gegenüberliegende axiale Vorsprünge (18, 85, 138-138') aufweisen, die vorzugsweise im wesentlichen in der Symmetrieebene XX' der Marke parallel zu den Außenflächen (13-15, 72-73, 72'-73', 139-139') der Marke angeordnete Kontaktflächen aufweisen.

14. Spielmarke nach Anspruch 13, dadurch gekennzeichnet, daß die Kontaktflächen zwischen den axialen Vorsprüngen (54, 60) eine Anordnung aus komplementären Nocken (64, 93) und hohlen Aufnahmen (66, 94) aufweisen, um die Vormontage der Scheibenhälften (50, 80, 90), insbesondere durch Ineinanderschieben, zu gestatten.

15. Spielmarke nach Anspruch 14, dadurch gekennzeichnet, daß die Scheibenhälften (95-95') auf Höhe der Nocken (93) und hohlen Aufnahmen (94) axiale Durchgangsdurchlässe (97-97') aufweisen, die sich zu den Außenflächen (101-101') der Scheibenhälften hin aufweiten und zur Aufnahme des mit der Verbindungsfuge (96) eingespritzten Kunststoffes ausgeführt sind.

16. Spielmarke nach einem der Ansprüche 1 bis 5, dadurch gekennzeichnet, daß die Innenfläche mindestens einer Scheibenhälfte (130-132) mehrere axiale Abstandsvorsprünge aufweist, die aus im wesentlichen den inneren Mittelbereich (134) begrenzenden Fingern (138-138') bestehen, wobei die Finger (138-138') dazu angeordnet sind, in dem inneren Mittelbereich einen einen Ballast bildenden Scheibeneinsatz oder einen eine elektronische Vorrichtung tragenden Einsatz zu halten.

17. Spielmarke nach einem der Ansprüche 1 bis 3, dadurch gekennzeichnet, daß die Innenfläche jeder Scheibenhälfte (130-132) mehrere axiale Abstandsvorsprünge enthält, die aus im wesentlichen den inneren Mittelbereich (134) begrenzenden Fingern (138-138') bestehen, wobei die Finger (138-138') eine Schulter aufweisen, die eine aus Kunstharz bestehende Tablette (136), die die elektronische Vorrichtung enthält, im wesentlichen in der Mitte des inneren Mittelbereichs hält.

18. Spielmarke nach einem der Ansprüche 1 bis 17,
dadurch gekennzeichnet, daß die Innenfläche (103) mindestens einer Scheibenhälfte (104, 130-132) einen axialen Abstandsvorsprung (116, 142-142') enthält, der vorzugsweise in mittlerer Position der Fläche in dem inneren Mittelbereich (112, 136) angeordnet ist.

19. Spielmarke nach einem der Ansprüche 1 bis 17, dadurch gekennzeichnet, daß der freie Raum im inneren Mittelbereich (112, 134) vollständig oder teilweise mit Klebstoff, Harz oder einem mit der Verbindungsfuge eingespritzten Kunststoff gefüllt ist.

20. Spielmarke nach einem der Ansprüche 12, 16, 17 und 19, dadurch gekennzeichnet, daß die Innenfläche mindestens einer Scheibenhälfte (50, 80) radiale Führungen (68, 82) enthält, die in dem ringförmigen Umfangsbereich (58) angeordnet sind, um das Fließen von um den ringförmigen Umfangsbereich (58) herum eingespritztem Stoff zu bremsen und das Füllen des inneren Mittelbereichs (28, 56) zu erleichtern.

21. Spielmarke nach einem der vorhergehenden Ansprüche, dadurch gekennzeichnet, daß die Scheibenhälften (121-122) im wesentlichen ebene Außenflächen (128) aufweisen und um den Umfang verlaufende (124) und/oder durchgehende (125, 126) Ausschnitte enthalten, die mit dem ringförmigen Umfangsbereich in Verbindung stehen, um zu gestatten, daß der Kunststoff der Fuge (123) an den Kanten und/oder durch die Außenflächen (128) zur Oberfläche gelangt und somit Flächenmotive für die Marke erzeugt.

22. Spielmarke nach Anspruch 21, dadurch gekennzeichnet, daß die Kanten (127) der in den Außenflächen (128) der Scheibenhälften (121-122) ausgebildeten Ausschnitte (124, 125, 126) abgeschrägt und in dem von der Fuge (123) stammenden Kunststoff eingebettet sind.

23. Spielmarke nach einem der vorhergehenden Ansprüche, dadurch gekennzeichnet, daß die einerseits für die Fuge (14, 83, 110, 123) und andererseits für die beiden Scheibenhälften (11-12, 80-81, 80'-81', 102-104, 121-122, 130-132) verwendeten Kunststoffe gegebenenfalls identisch ausgewählt und aus einem Basispolymer erhalten werden, das ausgewählt ist unter:
- Polyacetal und Acetalcopolymeren (POM);
- Polyamiden und ihren Copolymeren;
- Polyalkylenterephtalaten, insbesondere Polybutylenterephtalat (PBT);
- thermoplastischen Polyurethanen (PUR);
- Vinylpolymeren, insbesondere Polyvinylchlorid (PVC) ;
- Polyolefinen, insbesondere Polyethylenen (PE) und Polypropylenen.
